# EUROPEAN PATENT APPLICATION

(11) **EP 1 094 100 A1**
(43) Date of publication of application: **25.04.2001**
(21) Application number: 00915341.2
(22) Date of filing: 05.04.2000
(51) Int. Cl.: C09K 5/04, C10M 103/00, C10M 105/02, F25B 1/00

(54) **REFRIGERANT COMPOSITION, CLOSED ELECTRIC COMPRESSOR, AND REFRIGERATOR**

(30) Priority: 06.04.1999 JP 9858199; 18.11.1999 JP 32800499
(71) Applicant: MATSUSHITA REFRIGERATION COMPANY, Higashiosaka-shi, Osaka 577-8501 (JP)
(72) Inventor: KURACHI, Masao, Heguri-cho, Ikoma-gun, Nara 636-0931 (JP); NAKAGAWA, Nobuhiro, Nara-shi, Nara 631-0076 (JP); TAKAICHI, Kenji, Yao-shi, Osaka 581-0834 (JP); SAKAI, Hisakazu, Higashiosaka-shi, Osaka 577-0055 (JP); NOZUE, Akihiro, Miyakojima-ku, Osaka-shi, Osaka 534-0021 (JP)
(74) Representative: Eisenführ, Speiser & Partner
(86) International application number: JP0002189
(87) International publication number: WO0060021

(57) **Abstract**

It is an object to keep a level of an odorant at a detectable level upon leakage of a refrigerant contained in a refrigerating system of a refrigerant compression type in a refrigerating/air-conditioning field in which a hydrocarbon refrigerant blended with the odorant is used.

The present invention provides a refrigerant composition which includes at least one selected from ethane, propane, cyclopropane, propylene and iso-butane, and the composition contains ammonia as the odorant in the range between 1 % and 60 % by weight and preferably between 1 % and 20 % by weight.

## Description

### FIELD OF THE INVENTION

The present invention relates to a refrigerant composition, a hermetic motor compressor (closed motor-driven compressor) and a refrigerating apparatus which are used in a refrigerating system of a refrigerant compression type in a refrigerating or air conditioning field such as an air conditioner, a refrigerator and so on.

### BACKGROUND ART

Since a hydrofluorocarbon-based refrigerant which is used for a refrigerating system as an alternative refrigerant greatly affects the global warning, change to a natural refrigerant such as ammonia, air, a hydrocarbon and so on is currently considered.

Particularly, a hydrocarbon-based refrigerant of which main component is a hydrocarbon such as ethane, propane, cyclopropane, propylene, iso-butane and so on has thermal properties similar to those of the hydrofluorocarbon, so that it can be used in an existing refrigerating apparatus with a little design modification. Thus, the hydrocarbon-based refrigerant is focused on, and a refrigerator in which iso-butane is used as a refrigerant has been already used in Europe.

However, the refrigerant of which main component is a hydrocarbon is highly combustible (or inflammable), it is important to ensure safety of the refrigerant. Then, it has been proposed to include an odor component (which is referred to as an odorant) such as an alkylmercaptan, ammonia and so on in the refrigerant so as to odorize the refrigerant, whereby leak of the refrigerant can be detected by a man (see, for example, Japanese Patent Kokai Publication Nos. 8-176536 and 9-316439).

The hydrocarbon-based refrigerant of the prior art contains at least one component selected from ethane, propane, cyclopropane, propylene and iso-butane of which boiling points are in the range between -90 °C and -10 °C, and further contains as an odorant at least one component selected from an alkylmercaptan (such as methylmercaptan), an alkylsulfide (such as dimethyl sulfide), a thiophene (such as tetrahydrothiophene), an alkylamine (such as trimethylamine), ammonia, a ketone (such as methyl ethyl ketone), an aldehyde (such as acetaldehyde), a carboxylic acid (such as acetic acid), an ester (such as ethyl acrylate), an aromatic hydrocarbon (such as toluene) and an unsaturated hydrocarbon (such as hexyne) in a total concentration of 0.005 ppm to 1000 ppm (based on weight, hereinafter merely "ppm" is based on weight when not specifically mentioned).

When an odorant of which boiling point and melting point are higher is used, the odorant is separated and precipitated (i.e. condensed as another phase) in a portion such as an expansion mechanism and an evaporator of the refrigerating apparatus where the refrigerant becomes at a lower temperature, and the separated odorant remains there. As a result, an odorant concentration of the refrigerant is reduced, so that there occurs a possibility that when the refrigerant leaks out, a man can not detect the refrigerant leak.

An odorant which has a less heat resistance and a less compatibility with a material of the refrigerating apparatus decomposes in a portion such as a compressor which is particularly at a high temperature or reacts with a material of the compressor, so that an odorant concentration of the refrigerant is remarkably reduced. With a refrigerant containing such an odorant, there are not only a possibility that detection of the refrigerant leak cannot be ensured for a long period, but also a possibility that a reaction product between the odorant and the compressor material is precipitated and separated in for example an expansion mechanism so that re-circulation of the refrigerant is disturbed.

### DISCLOSURE OF THE INVENTION

It is therefore desirable to provide a hydrocarbon-based refrigerant containing an odorant which refrigerant avoids the odorant concentration reduction in the refrigerant due to the separation from the refrigerant in the refrigerating apparatus and which refrigerant has a good resistance and a good material compatibility at a high temperature.

The present invention intends to improve safety in a refrigerating system of a refrigerant compression type in the field of air conditioning and refrigerating, in which a hydrocarbon-based refrigerant blended with an odorant is used, by maintaining an odorant concentration of the refrigerant so that refrigerant detection is ensured upon refrigerant leak.

The present invention which achieves the object as described above provides a refrigerant composition which contains at least one hydrocarbon and ammonia characterized in that an ammonia concentration in the refrigerant composition is in the range between 1 % and 60 % by weight. The refrigerant composition according to the present invention contains the hydrocarbon as a hydrocarbon refrigerant, so that it may be referred to as a hydrocarbon-based refrigerant. Ammonia contained in the refrigerant composition functions as an odorant.

The refrigerant composition according to the present invention may be used in an air conditioning system or apparatus such as an air conditioner and a refrigerating system or apparatus such as a refrigerator or a cooler (hereinafter, referred to as a refrigerating apparatus in general). Particularly, the present refrigerant composition is useful when a hermetic motor compressor is used in such a refrigerating apparatus as described below. Thus, the present invention also provides the refrigerating apparatus or system as well as a compressor used in such an apparatus in which the refrigerant composition according to the present intention is used.

It is noted that although the present invention will be hereinafter described mainly with reference to the refrigerant composition, those descriptions are applicable to the refrigerating apparatus and the compressor according to the present invention.

### BRIEF DESCRIPTION OF THE DRAWINGS

Fig. 1 is a graph which shows a dissolution critical temperature between a hydrocarbon and ammonia;
Fig. 2 schematically shows one embodiment of a refrigerating cycle in which a refrigerant composition according to the present invention is used;
Fig. 3 schematically shows one embodiment of a dryer (or desiccator) of a refrigerating cycle in which a refrigerant composition according to the present invention is used;
Fig. 4 schematically shows one embodiment of a hermetic motor compressor which may be used in a refrigerating cycle in which a refrigerant composition according to the present invention is used;
Fig. 5 is a graph which shows a relationship between an ammonia composition (wt%) of a refrigerant composition according to the present invention and a capacity and a COP;
Fig. 6 is a graph which shows a relationship between an ammonia composition (wt%) of a refrigerant composition according to the present invention and a delivery pressure;
Fig. 7 is a graph which shows a relationship between an ammonia composition (wt%) of a refrigerant composition according to the present invention and a delivery temperature; and
Fig. 8 is a graph which shows a relationship between an ammonia composition (wt%) of a refrigerant composition according to the present invention and an explosion limits.

### DETAILED DESCRIPTION OF THE INVENTION

As to the hydrocarbon-based refrigerant according to the present invention, the remarkable concentration reduction of the odorant and the remarkable degradation of the odorant in the refrigerating apparatus which has been described in the background art chapter are suppressed by including, in a higher concentration than in the prior art, ammonia which has a boiling point near that of the hydrocarbon contained in the refrigerant and which may be used alone as a refrigerant. Considering a threshold value above which a man can detect ammonia in air (a critical detection concentration, about 50 mol-ppm/air), it is preferable that ammonia is contained in the hydrocarbon-based refrigerant (i.e. the refrigerant composition) in a concentration of at least 1 % by weight, and more preferably in a concentration between 1 % and 60 % by weight, and a concentration of between 1 % and 20 % by weight is particularly preferable. The ammonia concentration of the refrigerant composition according to the present invention is for example between 1 % and 10 % by weight (for example between 1 % and 4 % by weight, between 1 % and 3 % by weight), between 10 % and 25 % by weight, between 25 % and 60 % by weight (for example between 30 % and 60 %, between 35 % and 50 % by weight).

### Examples 1 to 4 and Comparative Examples 1 to 4

Provided that the critical amount of ammonia which a man can detect is contained in air (i.e. about 50 mol-ppm/air) when the refrigerant composition in the refrigerating apparatus leaks out, a concentration of the hydrocarbon refrigerant contained in air is calculated as in Table 1 below depending on the refrigerant composition.

**Table 1**

| | refrigerant composition in apparatus [wt %] | | | refrigerant composition in apparatus [mol %] | | | leak gas concentration in air [mol ppm/air] | | |
|---|---|---|---|---|---|---|---|---|---|
| | C₃H₈ | iso-C₄H₁₀ | NH₃ | C₃H₈ | iso-C₄H₁₀ | NH₃ | C₃H₈ | iso-C₄H₁₀ | NH₃ |
| Exam. 1 | 99 | 0 | 1 | 97 | 0 | 2.55 | 1,913 | 0 | 50 |
| Exam. 2 | 90 | 0 | 10 | 78 | 0 | 22.34 | 174 | 0 | 50 |
| Exam. 3 | 70 | 10 | 20 | 54 | 15 | 40.02 | 68 | 18 | 50 |
| Exam. 4 | 10 | 70 | 20 | 9 | 84 | 45.06 | 10 | 93 | 50 |
| Comp. Exam. 1 | 99.9 | 0 | 0.1 | 100 | 0 | 0.26 | 19299 | 0 | 50 |
| Comp. Exam. 2 | 99.99 | 0 | 0.01 | 100 | 0 | 0.03 | 193163 | 0 | 50 |
| Comp. Exam. 3 | 0 | 99.9 | 0.1 | 0 | 100 | 0.34 | 0 | 14686 | 50 |
| Comp. Exam. 4 | 0 | 99.99 | 0.01 | 0 | 100 | 0.03 | 0 | 146583 | 50 |

As seen from Table 1, when the refrigerant composition which contains propane (C₃H₈) or iso-butane (i-C₄H₁₀) as a hydrocarbon refrigerant contains ammonia in a concentration between 1 % and 20 % by weight, the ammonia concentration in air is about 50 mol-ppm/air at the hydrocarbon concentration in air between about 100 and 2000 mol-ppm/air, so that ammonia irritating odor can be detected.

The hydrocarbon concentration in air as above is generally one tenth of a lower explosion limit of the hydrocarbon alone in the range between 1.5 and 2 vol. %. Thus, it is expected that the hydrocarbon-based refrigerant according to the present invention is relatively safe. On the other hand, the refrigerant composition of which ammonia concentration is less than 0.1 % by weight (1000 ppm) is less safe since ammonia odor cannot be detected unless the hydrocarbon concentration becomes greater than 10000 mol-ppm/air.

It is preferable that the hydrocarbon which is used for the refrigerant composition according to the present invention is at least one selected from ethane, propane, cyclopropane, propylene and iso-butane. Particularly, propane and iso-butane are preferable. When those hydrocarbons are used, the refrigerant composition according to the present invention shows an appropriate performance in the refrigerating system of the refrigerant compression type in the air conditioning or refrigerating field such as an air conditioner and a refrigerator since the boiling points of those hydrocarbons are in the range between - 90 °C and -10 °C.

As one example, the ammonia concentration of the refrigerant composition according to the present invention which contains propane is in the range between 1 % and 60 % by weight. For example, the ammonia concentration may be in the range between 1 % and 5 % by weight (for example up to 4 % by weight), in the range between 5 % and 10 % by weight, in the range between 10 % and 25 % by weight (for example in the range between 13 % and 25 % by weight), or in the range between 25 % and 60 % by weight (for example in the range between 30 % and 50 % by weight).

As another example, the ammonia concentration of the refrigerant composition according to the present invention which contains iso-butane is in the range between 1 % and 60 % by weight. For example, the ammonia concentration may be in the range between 1 % and 15 % by weight (for example up to 12 % by weight), in the range between 15 % and 25 % by weight, or in the range between 25 % and 60 % by weight (for example in the range between 30 % and 60 % by weight).

Further, the ammonia concentration of the refrigerant composition according to the present invention which contains the other hydrocarbon is in the range between 1 % and 60 % by weight. For example, the ammonia concentration may be in the range between 1 % and 20 % by weight (for example in the range between 1 % and 5 % by weight), in the range between 5 % and 10 % by weight, or in the range between 25 % and 60 % by weight.

More concretely, the present invention includes the following refrigerant compositions:
The refrigerant composition which contains ammonia in the range between 1 % and 40 % by weight and propane in the range between 99 % and 60 % by weight;
The refrigerant composition which contains 30 % by weight of ammonia and 70 % by weight of propane;
The refrigerant composition which contains 1 % by weight of ammonia and 99 % by weight of propane;
The refrigerant composition which contains 5 % by weight of ammonia and 95 % by weight of propane;
The refrigerant composition which contains 10 % by weight of ammonia and 90 % by weight of propane;
The refrigerant composition which contains ammonia in the range between 15 % and 60 % by weight and iso-butane in the range between 85 % and 40 % by weight; and
The refrigerant composition which contains 50 % by weight of ammonia and 50 % by weight of iso-butane.

When the refrigerant composition according to the present invention is used in the refrigerating apparatus forming the refrigerating cycle in which the refrigerant composition is compressed, condensed, expanded and evaporated, there is an advantage that ammonia irritating odor can be detected while an explosion risk upon the refrigerant composition leak is lower compared with the prior art refrigerant.

It is to be noted that when a hydrocarbon-based refrigerating machine oil of which sulfur concentration is not greater than 0.01 % by weight is used in the refrigerating apparatus in which the refrigerant composition according to the present invention is used, the ammonia concentration reduction in the refrigerant composition due to the reaction of ammonia with the refrigerating machine oil may be suppressed.

As such hydrocarbon-based refrigerating machine oil, an alkylbenzene oil or a polyolefin oil is preferably used. Since those hydrocarbon-based refrigerating machine oils are synthesized oils, the sulfur content thereof may be particularly reduced so that the remarkable ammonia concentration reduction due to the reaction of ammonia with the refrigerating machine oil may be suppressed.

### Examples 5 to 8 and Comparative Examples 5 to 7

The effect of the sulfur content of the refrigerating machine oil was confirmed by carrying out the following tests. The refrigerant composition, the refrigerating machine oil and a metal sample were sealed in a glass tube. The glass tube was kept in a constant temperature condition (175 °C for 168 hours or 504 hours), and then color change of the refrigerating machine oil, and appearance and corrosion degree of the metal sample were determined, based on which compatibility of the refrigerant composition with the refrigerating machine oil and the metal.

The manner of the above described test is according to JIS K 2211, Annex 2 which describes chemical stability tests of a refrigerant and a refrigerating machine oil. The test conditions and the degradation degrees of the refrigerating machine oil and the metal are shown in Table 2 below.

**Table 2**

| | refrigerant composition [wt %] | | refrigerating machine oil | | test condition | | | degradation after test | | |
|---|---|---|---|---|---|---|---|---|---|---|
| | C₃H₈ | NH₃ | type | sulfur content [wt %] | temp. [°C] | period [h] | metal | oil coloring | metal appearance | corrosion degree [ppm] |
| Exam. 5 | 90 | 10 | HAB 46 | <0.01 | 175 | 168 | Cu, Fe, Al | L0.5 | no change | <2 |
| Exam. 6 | 90 | 10 | HAB 46 | <0.01 | 175 | 504 | Cu, Fe, Al | L0.5 | no change | <2 |
| Exam. 7 | 90 | 10 | HAB 46 | <0.01 | 140 | 168 | Brass | L0.5 | no change | <2 |
| Exam. 8 | 90 | 10 | HAB 46 | <0.01 | 175 | 168 | Brass | L0.5 | no change | <2 |
| Comp. Exam. 4 | 90 | 10 | 4 GSD | 0.06 | 175 | 168 | Cu, Fe, Al | L1.0 | Cu: blackened | 4 |
| Comp. Exam. 5 | 90 | 10 | S32 | 0.20 | 175 | 168 | Cu, Fe, Al | L1.5 | Cu: blackened | 4 |
| Comp. Exam. 6 | 90 | 10 | PN 46 | <0.01 | 175 | 168 | Cu, Fe, Al | L3.5 | Cu: blackened | 3∼10 |

The degradation degree is a content of a metal which dissolved or precipitated in the refrigerating machine oil. The oil coloring was measured according to JIS K 2580.

In Table 2, the refrigerant composition contained 90 % by weight of propane (indicated as C₃H₈ in Table 2) and 10 % by weight of ammonia (indicated as NH₃ in Table 2), and the following refrigerating machine oils were used: an alkylbenzene-based synthetic oil having a viscosity of 46 mm²/s at 40 °C (indicated as HAB46 in Table 2, trade name of HAB46 manufactured by Nippon Oil), a naphthene-based mineral oil having a viscosity of 56 mm²/s at 40 °C (indicated as 4GSD in Table 2, trade name of SUNISO 4GSD manufactured by Nippon Sun Oil), a paraffin-based mineral oil having a viscosity of 32 mm²/s at 40 °C (indicated as S32 in Table 2, trade name of Fleol S32 manufactured by Japan Energy) and a glycol-based synthetic oil having a viscosity of 46mm²/s at 40 °C (indicated as PN46 in Table 2, trade name of Fleol PN46 manufactured by Japan Energy).

As the metal samples, copper (indicated as Cu in Table 2), iron (indicated as Fe in Table 2), aluminum (indicated as Al in Table 2) and brass which are generally used for materials constituting the compressor were used in the form of wires. Each of the metal samples of Cu, Fe and Al had a purity of 99.9 %. The corrosion degree of the refrigerating machine oil was quantitatively measured by inductively coupled plasma emission spectrometry (ICP).

It has been confirmed from Table 2 that when the sulfur content of the oil is larger in the hydrocarbon-based oil such as a mineral oil, the color change of the refrigerating machine oil and the metal corrosion are more likely to occur when compared with the alkylbenzene based oil, which is supposed to be resulted from a sulfur containing compound such as a thiophene contained in the refrigerating machine oil. Further, where the glycol-based oil is used, the refrigerating machine oil changes its color and metal dissolution is about ten times greater as that of the hydrocarbon-based oil, and it is afraid that degradation reaction with ammonia at a highly polar ether bond.

Therefore, it has been found that as the refrigerating machine oil used in the refrigerating system in which the refrigerant composition according to the present invention is used, the hydrocarbon-based oil which is less polar and has a low sulfur content, and concretely the alkylbenzene-based synthetic oil or the polyolefin-based synthetic oil shows the good properties.

Further, it is preferable that at least one selected as a oiliness improver from an alpha-olefin, a higher aliphatic alcohol and a fluorinated higher aliphatic alcohol as well as a phenol-based antioxidant are blended with the refrigerating machine oil used in the refrigerating system in which the refrigerant composition according to the present invention is used. In this case, using the oiliness improver and the antioxidant which are less polar and less active improves lubrication properties and oxidation resistance of the refrigeration machine oil without degrading thermal properties of ammonia and the refrigerating machine oil.

It is preferable that a hermetic motor compressor is used in the refrigerating apparatus in which the refrigerant composition according to the present invention is used. This is because the hermetic motor compressor is isolated from its ambience by means of a closed and pressure-proof vessel in which a driving motor member and a compression member are placed. By using the hermetic motor compressor so as to form a completely closed refrigerating cycle, no water comes into the cycle from the outside so that no water is separated to form another phase. Thus, such water is prevented from freezing at a low temperature portion such as an expansion mechanism and an evaporator, and the reactive activity of ammonia is suppressed. Further, since the intrusion of water is prevented, degradation of an organic material in the compressor such as an insulation material involved with the motor is prevented.

In such case, it is preferable that a drying agent or desiccating agent of A-type synthetic zeolite comprising sodium/potassium type aluminosilicate is placed in the refrigerating cycle of the refrigerating apparatus. By adsorbing water in the refrigerating cycle using the synthetic zeolite, the separation of water from the refrigerant composition and the freeze of such water at the lower temperature portion (such as an expansion mechanism and an evaporator) are prevented, and also the reactive activity of ammonia is suppressed.

It is noted that the drying agent is preferably so placed that it contacts with the refrigerant composition in its liquid condition at a temperature above a dissolution critical temperature between the hydrocarbon refrigerant and ammonia (i.e. a temperature above which the hydrocarbon refrigerant and ammonia dissolve with each other and do not separate into two phases). By contacting the synthetic zeolite with the refrigerant composition according to the present invention of which dissolved water content is decreased due to the inclusion of the hydrocarbon, water contained in the refrigerant composition according to the present invention can be effectively adsorbed. As a result, the separation of water and the freeze of the separated water in the low temperature portion such as the expansion mechanism or the evaporator and the reactive activity of ammonia are suppressed.

Since a molecular diameter of water is nearly the same as that of ammonia, A-type synthetic zeolite comprising sodium/potassium type aluminosilicate adsorbs both water and ammonia even though it has a minimum pore size of 0.3 nm. A water saturated hydrocarbon refrigerant contains water below several ppms at a temperature of 0 °C while ammonia is highly water absorbable such that ammonia and water dissolves indefinitely with each other. Therefore, it is generally extremely difficult to carry out dehydration in a system in which ammonia is present together like the refrigerant composition according to the present invention. However, A-type synthetic zeolite comprising sodium/potassium type aluminosilicate shows a stronger adsorption to water compared with ammonia, so that dehydration up to about 1000 ppm (water content in an ammonia phase) is possible even for ammonia-water system.

As to removal of water contained in the refrigerant composition according to the present invention, properties of the hydrocarbon-based refrigerant composition according to the present invention were studied which contained ammonia in the range between 1 % and 20 % by weight as the odorant, and it has been found that the dehydration can be easily carried out at a temperature above the critical dissolution temperature between the hydrocarbon and ammonia since water separates and forms another phase because of a low saturation water content below 50 ppm at a temperature of 0 °C.

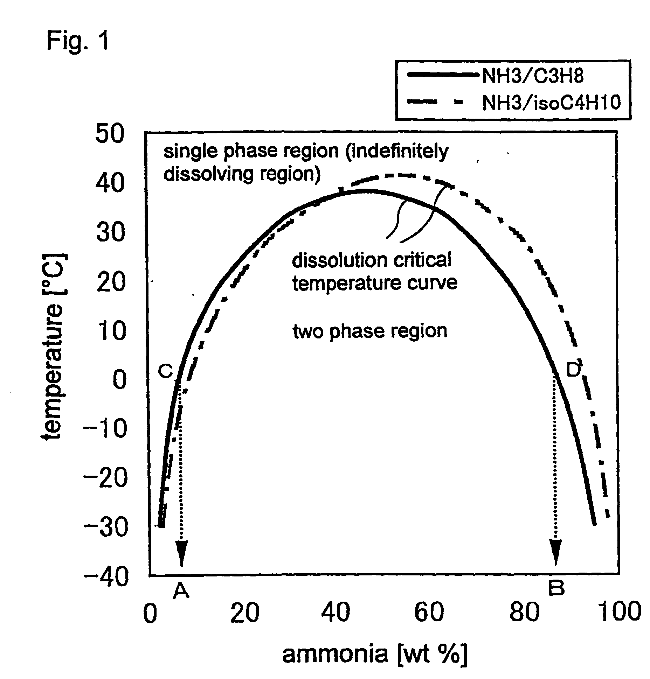

A dissolution critical temperature curve is shown in Fig. 1 which shows a dissolution state relationship between a hydrocarbon liquid phase and an ammonia liquid phase. A mixture of the hydrocarbon and ammonia which is located below the critical dissolution temperature curve in Fig. 1 separates into two phases, i.e. the hydrocarbon phase and the ammonia phase. For example, as to a system of propane (C₃H₈) and ammonia (NH₃), when 93.3 % to 12.7 % by weight of propane and 6.7 % to 87.3 % by weight of ammonia are mixed, the thus resulted mixture phase-separates at a temperature of 0 °C into a propane phase (indicated as "A" in Fig. 1) containing 6.7 % by weight of ammonia and a ammonia phase (indicated as "B" in Fig. 1) containing 87.3 % by weight of ammonia. When water was added to a refrigerant composition (indicated as "C" in Fig. 1) of which composition (propane 95 % by weight, ammonia 5 % by weight) was near the above propane phase, it has been found that the addition of water of about 50 ppm resulted in water phase separation.

When ammonia, propane, water and A-type synthetic zeolite of sodium/potassium type aluminosilicate having a pore diameter of 0.3 nm were present together in an ammonia : propane: water : zeolite ratio of 1.4 g : 25.1 g : 22 mg (corresponding to 830 ppm) : 1 g, water was found to be disappeared. This synthetic zeolite adsorbs ammonia of maximally about 15 % by weight of the zeolite. However, when the synthetic zeolite is used in an amount sufficiently small relatively to the total weight of the refrigerant composition which has the composition specified above, the remarkable ammonia concentration reduction of the refrigerant composition can be prevented.

On the other hand, when water was added to a refrigerant composition (indicated as "D" in Fig. 1) of which composition (propane 9 % by weight, ammonia 91 % by weight) was near the above ammonia phase of B, it has been found that the addition of water of even 1000 ppm resulted in no water phase separation, which means that the saturated water content of the ammonia phase is large.

Therefore, it is supposed that dehydration with the drying agent is inefficient at a temperature below the dissolution critical temperature so that the hydrocarbon liquid phase separates from the ammonia liquid phase, whereby water content in the refrigerating apparatus cannot be suppressed to a low level.

Considering the above observations, it has been found that with the refrigerant composition which contains ammonia in the range between 1 % and 20 % by weight as the odorant, contacting the refrigerant composition in its liquid condition with A-type synthetic zeolite of sodium/potassium type aluminosilicate at a temperature above the dissolution critical temperature easily dehydrates the composition, which leads to a water content of not larger than 50 ppm contained in the refrigerant composition in the refrigerating apparatus.

As an insulation material which is used in the compressor and preferably the hermetic motor compressor used in the refrigerating apparatus in which the refrigerant composition according to the present invention is used (for example, insulation materials of a motor), the following materials may be used: a poly(phenylene sulfide), a polysulfone, a poly(ether sulfone), a polyetheretherketone, a polyetherimide, a polyamideimide and a polyesterimide. Preferably, these materials may be used alone, or any combination of at least two of these materials may be used. These materials have good electrically insulating properties as well as good compatibilities with the refrigerating composition according to the present invention containing ammonia in the range preferably between 1 % and 20 % by weight as the odorant. Thus, using such insulation materials, the remarkable ammonia concentration reduction in the refrigerating composition due to the degradation reaction of the insulation materials with ammonia can be prevented.

Similarly, for a cluster and a muffler (which suppresses pressure pulsation of a refrigerant gas) which are constituting members of the hermetic motor compressor, the following materials may be used: a poly(phenylene sulfide), a polysulfone, a poly(ether sulfone), a polyetheretherketone and a polyetherimide. Preferably, these materials may be used alone, or any combination of at least two of these materials may be used. These materials have good a mechanical strength as well as good compatibilities with the refrigerating composition according to the present invention containing ammonia in the range preferably between 1 % and 20 % by weight as the odorant. Thus, using such materials for the constituting members, the remarkable ammonia concentration reduction in the refrigerating composition due to the degradation reaction of the constituting members with ammonia can be prevented.

As a magnet wire for a motor of the compressor, particularly the hermetic motor compressor of the refrigerating apparatus in which the refrigerant composition according to the present invention is used, a lead wire selected from a copper wire, a nickel plated copper wire, an aluminum wire and an aluminum coated copper wire is preferably used. These leads have good electrically conductive properties as well as good compatibilities with the refrigerating composition according to the present invention containing ammonia in the range preferably between 1 % and 20 % by weight as the odorant. Thus, using such leads for the magnet wires, the remarkable ammonia concentration reduction in the refrigerating composition due to the degradation reaction of the constituting member such as lead with ammonia can be prevented.

### Examples 9 to 12 and Comparative Examples 8 and 9

As to the compatibilities of the insulation materials and the constituting member materials were confirmed by carrying out the following tests. The refrigerant composition, the refrigerating machine oil and a sample were sealed in a glass tube or a metal vessel. The glass tube or the vessel was kept in a constant temperature condition (a temperature in the range between 130 °C to 150 °C for 168 hours or 336 hours), and then appearance change and strength degradation of the sample were determined, based on which the compatibilities of the refrigerant composition and the refrigerating machine oil with the sample. The test conditions are shown in Table 3, and the results of the compatibility estimation are shown in Table 4.

**Table 3**

| | refrigerant composition [wt %] | | refrigerating machine oil | | test condition | | |
|---|---|---|---|---|---|---|---|
| | C₃H₈ | NH₃ | type | sulfur content [wt%] | temp. [°C] | period [h] | water [ppm] |
| Example 9 | 90 | 10 | HAB46 | <0.01 | 140 | 168 | <50 |
| Example 10 | 90 | 10 | HAB46 | <0.01 | 140 | 168 | 1000 |
| Example 11 | 90 | 10 | HAB46 | <0.01 | 130 | 336 | (300) |
| Example 12 | 90 | 10 | HAB46 | <0.01 | 150 | 336 | (300) |
| Comparative Example 8 | 90 | 10 | HAB46 | <0.01 | 140 | 168 | <50 |
| Comparative Example 9 | 0 | 100 | HAB46 | <0.01 | 150 | 336 | (300) |
| In Table 3, ( ) means an estimated value. | | | | | | | |

**Table 4**

| | compatibility of insulation film | | | | | | compatibility of magnet wire coating | | | | |
|---|---|---|---|---|---|---|---|---|---|---|---|
| | PET | PEX | PEN | PPS | PES | PSF | PEI | AI | AI/EI | EI | PES |
| Exam. 9 | | | | ⓞ | ⓞ | ⓞ | ⓞ | ○ | ○ | ○ | ○ |
| Exam. 10 | | | | ⓞ | ○ | ○ | X | X | X | X | X |
| Exam. 11 | | | | ⓞ | ⓞ | ○ | ○ | ○ | △ | △ | ○ |
| Exam. 12 | | | | ⓞ | ○ | X | X X | △ | X X | X X | △ |
| Comp. Exam. 8 | X X | X X | X | | | | | | | | |
| Comp. Exam. 9 | | | | ○ | X | X X | X X | X X | X X | X X | X X |

In order to unify the shape of the insulation materials, each of the materials was formed into an insulation film sample having a thickness of 200 to 300 µm. As to Table 4, the following materials were used: a poly(ethylene terephthalate) film (PET in Table 4), a poly(ethylene naphthalate) film (PEN in Table 4), and a poly(ethylene terephthalate) film both-side coated with poly (phenylene sulfide) film (PEX in Table 4) which have been used in the prior art, as well as a poly(phenylene sulfide) film (PPS in Table 4), a polysulfone (PES in Table 4) film, a poly(ether sulfone) film (PSF in Table 4) and a polyetherimide (PEI in Table 4) which have been selected as improved materials.

As the magnet wire materials, a copper wire of a diameter of 0.75 mm having a monolayer coating of a polyamideimide (AI in Table 4), a copper wire of a diameter of 0.75 mm having an upper coating layer of a polyamideimide and a lower coating layer of a polyesterimide (AI/EI in Table 4), a copper wire of a diameter of 0.75 mm having a monolayer coating of a polyesterimide (EI in Table 4), and a copper wire of a diameter of 0.75 mm having a monolayer coating of a polyethersulfone (PES in Table 4) were used.

Degradations of properties such as a mechanical strength and an electrically insulating property were relatively estimated and grading of the compatibility is indicated using ⓞ (best), ○, △, X, and X X.

From the results shown in Table 4, Example 9 (140 °C, 168 h and water content in the refrigerant composition of not larger than 50 ppm) showed the good results as any of the selected materials while the polyester resins such as PET, PEN, PEX and the like which are used in the conventional compressor showed heavy degradation as seen from Comparative Example 8, which has confirmed that they react with ammonia contained in the refrigerant composition. Further, as seen from Examples 10 to 12, even though the preferable material is used, it may be less preferable depending on the water content and the temperature. For example, the water content of not smaller than 300 ppm is likely to cause the degradation. Thus, considering Comparative Example 9 in which the ammonia content is 100 % by weight, the improvement of Example 10 or 12 is not so large. However, since the refrigerant composition which is a mixture of the hydrocarbon and ammonia is easily dehydrated, it is expected that the mechanical strength and the electrical properties may be kept when the water content of the refrigerant composition is reduced to not larger than 50 ppm by means of the drying agent.

It is noted that no polyetheretherketone was not tested since a film having the same shape could not be prepared, but it would show similar properties to those of PSF since it has an ether bond similar to that of PSF. In the above tests, only the magnet wire of the copper lead was estimated, even a nickel plated copper wire, an aluminum wire and an aluminum coated copper wire would result in the similar effects (i.e. improved resistances which are similar to or better than those of the copper wire as shown in Table 4) according to the fact that combination of the refrigerant composition made of the hydrocarbon and ammonia according to the present invention with the low sulfur content refrigerating machine oil provides the low corrosion property with respect to the metal, which fact is based on the results of the compatibilities between the refrigerant composition according to the present invention and the refrigerating machine oils, and the metals shown in Table 2.

Further, in the hermetic motor compressor preferably used in the refrigerating system in which the refrigerant composition according to the present invention is used, as an elastomer which is used for sealing or vibration-proof of members, at least one which is selected from an acrylonitrile-butadiene rubber, a hydrogenated acrylonitrile-butadiene rubber, a fluorine-containing rubber and an amide-based thermoplastic elastomer and which is alkali-resistive is preferably used alone or in combination thereof. When using such an elastomer which is alkali-resistive, it not only provides improved sealing and vibration-proof, but also prevents the remarkable concentration reduction of ammonia in the refrigerant composition due to the degradation reaction of ammonia with the constituting members of the compressor.

In one embodiment, the refrigerant composition according to the present invention is a mixture refrigerant which contains 90 % by weight of propane as the hydrocarbon refrigerant and 10 % by weight of ammonia as the odorant, and thus it is the hydrocarbon-based refrigerant composition. It is to be noted that similar effects to those of the above refrigerant composition can be obtained when ammonia in the range between 1 % and 60 % by weight (based on the total weight of the refrigerant composition), and preferably between 1 % and 20 % by weight (based on the total weight of the refrigerant composition) is added as the odorant into at least one selected from ethane, propane, cyclopropane, propylene and iso-butane of which boiling points are in the range between -90 °C and -10 °C.

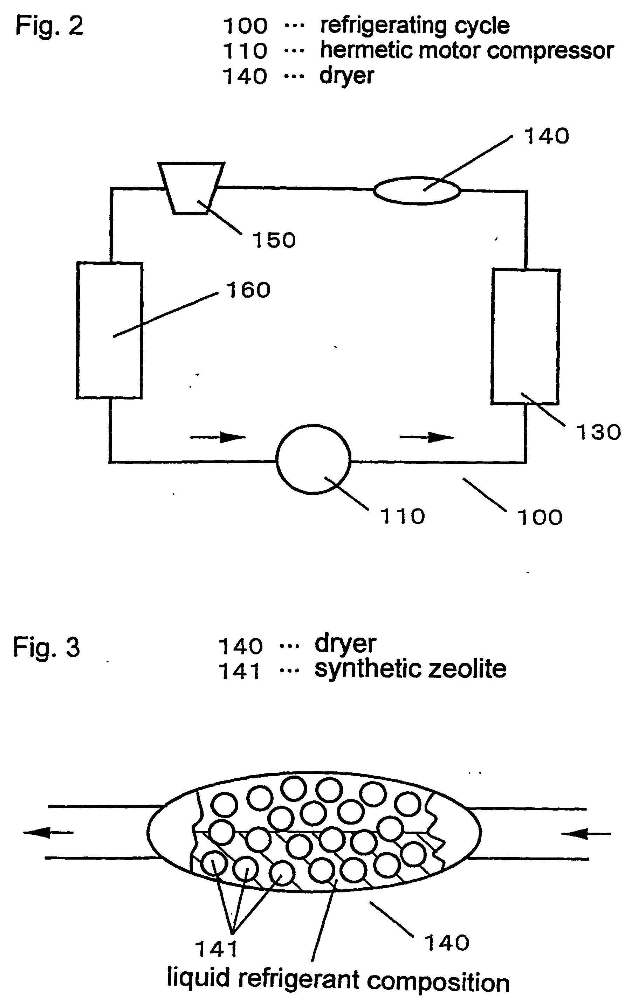

A concrete embodiment of the refrigerating apparatus in which the refrigerant composition according to the present invention is used will be hereinafter explained with reference to Figs. 2 to 4. Referring to Fig. 2, a refrigerating cycle 100 of the refrigerating apparatus comprises a hermetic motor compressor (or closed motor-driven compressor) 110, a condenser 130, a dryer (or desiccator) 140, an expansion mechanism 150 and an evaporator 160, which are connected by conduits as shown. The refrigerant composition according to the present invention flows through the cycle as shown with the arrows.

As shown in Fig. 3 which is a schematic drawing of the dryer 140, it contains A-type synthetic zeolite 141 (for example in a particulate form) of sodium/potassium type aluminosilicate having an average pore diameter of 0.3 nm, and the zeolite contacts with the refrigerant composition in its liquid condition at a temperature of above about 10 °C which is a dissolution critical temperature of 90 % by weight of propane and 10% by weight of ammonia.

When the mixture refrigerant of 90 % by weight of propane and 10 % by weight of ammonia as the odorant is used in the above embodiment, the contact of the liquid refrigerant should be carried out above the dissolution critical temperature (about 10 °C) between propane and ammonia, but it is noted that when a mixture refrigerant of 99 % by weight of propane and 1 % by weight of ammonia as the odorant is used, the dryer 140 may be placed inside the evaporator 160 where a saturated water content is presumed to be lower since the dissolution critical temperature of such mixture is below -30 °C.

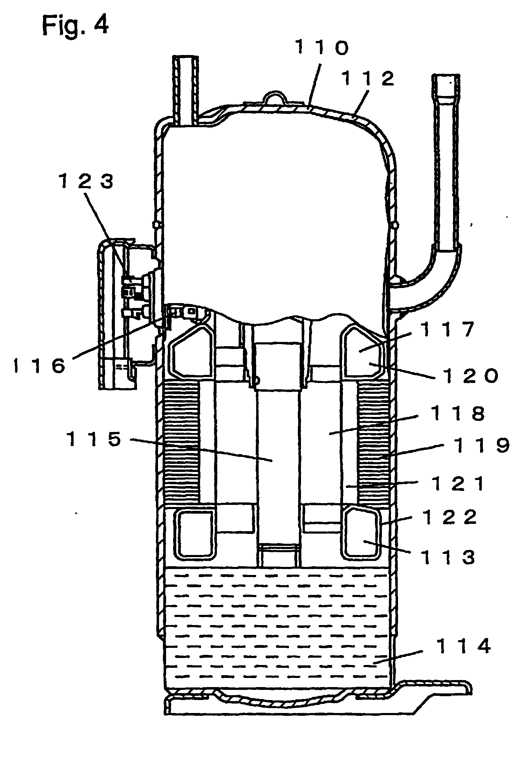

Fig. 4 shows a schematic cross-sectional view of one embodiment of a hermetic motor compressor 110 which is preferably used in the refrigerating apparatus wherein the refrigerant composition according to the present invention is used. In a closed vessel 112, there is a compression member (not shown) which compresses the refrigerant composition and a motor member 113 which drives the compression member. The vessel 112 contains a liquid mixture 114 of the refrigerant composition and a refrigerating machine oil in its bottom.

The refrigerating machine oil which may be used in the shown embodiment is for example an alkylbenzene-based synthetic oil of which viscosity is 46 mm²/s at 40 °C and sulfur content is not larger than 0.01 % by weight, to which a phenol-based antioxidant is added and which has good compatibilities with the refrigerant composition according to the present invention and also with the metal materials used for the refrigerating apparatus. Such refrigerating machine oil and said refrigerant composition in the liquid state according to the present invention containing 90 % by weight of propane and 10 % by weight of ammonia dissolves indefinitely with each other at room temperature so that it is expected that problems such as degradation of electric insulation property and residence of the refrigerating machine oil in the evaporator caused by the separation into the two phases do not occur. In this embodiment, a leak current of the motor contained in the closed vessel 112 at room temperature under a pressure of 10 atm. is about 0.5 mA at 1200 V, which is not so different from the case in which a hydrocarbon refrigerant is used under the same conditions, and thus, it has been found that the refrigerant composition of the present invention is sufficient.

Although in the above embodiment, the alkylbenzene-based synthetic oil is exemplified, a polyolefin-based synthetic oil or a hydrocarbon based refrigerating machine oil of which sulfur content is not larger than 0.01 % by weight may be used so as to obtain effects similar to those as described above. Also, although in the above embodiment, no oiliness improver is used, at least one selected from an α-olefin, a higher aliphatic alcohol and a fluorinated higher aliphatic alcohol may be blended as the oiliness improver with the refrigerating machine oil.

The compression member (not shown) is connected to the motor member 113 through a drive-shaft 115, and power is supplied to the motor member 113 from power terminals 123 through connections 116 comprising leads and clusters. For insulations of the leads and the clusters, a braid, a film and a formed article of a poly(phenylene sulfide) (PPS) may be used.

The motor member 113 is composed of a stator 117 and a rotor 118. The stator 117 is in the form of a cylinder of which outer surface is supported by the closed vessel 112. The rotor 118 is supported by the drive-shaft 115 such so as to keep a certain distance from an inner surface of the stator 117. The stator 117 is composed of a core 119 which is formed by laminating iron plates into a cylinder form, magnet wires which passes through slots longitudinally formed around the core 119, insulation films 121 which insulate the core 119 from the magnet wires 120 and also one magnet wire from other magnet wires, and a binding thread which binds portions of the magnet wires which extend out of an end surface of the core 119, and these members are bonded together by means of a coil varnish 122.

Similarly to the lead insulations and the clusters as described above, a film and a braid made of a poly(phenylene sulfide) (PPS) may be used for the insulation films 121 and the binding threads. For the magnet wire 120, a copper lead may be used which is coated with an upper layer of a polyamideimide and a lower layer of a polyasterimide (AI/EI). For the coil varnish 122, an epoxy resin may be used.

After operating a refrigerating apparatus comprising the compressor as described above for about one month under an overload condition, no change was observed in the refrigerant composition and no remarkable change was observed in the structural (or constituting) materials of the apparatus, which confirms the durability of the refrigerant composition according to the present invention. Further, no residence or maldistribution of the refrigerant composition was observed and no remarkable local reduction of ammonium concentration was seen.

It is noted that for insulation materials of the motor, the insulations of the leads and the clusters which are constituting members, and the insulation films 121 and the binding threads, at least one selected from a polysulfone (PSF), a poly(ether sulfone) (PES), a polyetheretherketone (PEEK), and a polyetherimide (PEI) may be used in place of the poly(phenylene sulfide) (PPS), and effects similar to those described above will be obtained.

Further, in place of using the copper lead which is coated with the upper layer of a polyamideimide and the lower layer of a polyesterimide (AI/EI), a lead wire selected from a nickel plated copper wire, an aluminum wire and an aluminum coated copper wire may be combined with a coating of at least one selected from a polyamideimide (AI), a polyesterimide (EI), a poly(ether sulfone) (PES), a polyetheretherketone (PEEK) and a poly(phenylene sulfide) so that and effects similar to those described above will be obtained. The coating may be used in a single layer or in plural layers.

In addition, at least one selected from an acrylonitrile-butadiene rubber, a hydrogenated acrylonitrile-butadiene rubber, a fluorine-containing rubber and an amide-based thermoplastic elastomer which is of a good alkali resistance may be used for sealing and vibration-proof of the compressor. These elastomers may be used alone or in combination thereof.

### Example 13

Using a refrigerant composition according to the present invention which contained 8 % by weight of ammonia and 92 % by weight of propane and which was azeotropic (indicated as "refrigerant A" in Table 5 below), an air conditioner was operated as a standard cooling mode and a standard heating mode using a compressor of which rotation number was variable. Refrigerating cycle characteristics of such operations are shown in Table 5 together with basic characteristics (100) of a flon refrigerant referred to as R22. It is noted that the rotation number of the compressor was adjusted so as to provide the same capacity as to each refrigerant.

**Table 5**

| | R22 | propane | refrigerant A |
|---|---|---|---|
| COP upon cooling | 100 | 103 | 103 |
| rotation number of compressor | 100 | 115 | 105 |
| COP upon heating | 100 | 100 | 105 |
| rotation number of compressor | 100 | 113 | 103 |

Although ammonia has small solubilities with a mineral oil, an alkylbenzene oil and an olefin oil, the mineral oil was used in this example as the refrigerating machine oil which had a large solubility with propane. When a viscosity of the refrigerating machine oil is too small, an ester oil and a glycol oil may be used alone or in combination if necessary.

As clearly seen from Table 5, the cycle characteristics of the refrigerant A which is a mixture of 8 % by weight of ammonia and 92 % by weight of propane exceed the flon refrigerant referred to as R22 and propane alone as to COPs (coefficients of performance) of both of the cooling mode and the heating mode.

The rotation number of the compressor to obtain the same capacity when the refrigerant A is used is able to be closer to that of the flon refrigerant referred to as R22 than that of propane alone, which leads to an advantage that an existing apparatus for R22 may be used without modification of for example a cylinder volume of the compressor.

As to explosion risk of the refrigerant A which is a mixture of 8 % by weight of ammonia and 92 % by weight of propane, the following may be supposed: Ammonia is less inflammable and its inflammable range is so relatively large as between about 16 vol% and 25 vol%. An inflammable range (or explosion limit) of propane alone is in the range between about 2 vol% and 10.4 vol%, and thus it results in an inflammation (or explosion) risk even at a low concentration. However, by adding ammonia to form the refrigerant composition of ammonia and propane, an upper limit and a lower limit of the inflammable range in air are increased respectively, so that the inflammation occurs at a larger concentration than that of the propane alone. Therefore, upon leak of the refrigerant composition even in a large amount, the explosion risk can be suppressed.

Results of explosion comparison tests as to propane alone and the refrigerant A are shown in Table 6 below:

**Table 6**

| | example: refrigerant A / air | prior art: propane / air |
|---|---|---|
| run 1 | inflammation on every time of current passage | explosion on 2nd time of current passage |
| run 2 | inflammation on every time of current passage | explosion on 1st time of current passage |
| run 3 | inflammation on every time of current passage | explosion on 1st time of current passage |
| run 4 | inflammation on every time of current passage | explosion on 2nd time of current passage |

### Test conditions are as follows:

A vessel in which the tests were carried out was made of acrylic resin plates and had an inner dimension of 300 mm x 300 mm x 300 mm. Only an upper lid of the vessel could be opened. Ambient temperature was 20 °C. A hermetic compact fan was placed in the vessel and air and the refrigerant were mixed just before ignition. As an ignition source, an igniter of which spark voltage was 10 kV was used, and current was passed for one second. When no ignition occurred, current was passed again after five seconds. This current passage was repeated three times and explosion/inflammation was observed. A mixing ratio of air and propane was 92:8 near a stoichiometric ratio at which an explosion pressure is the largest. The same mixing ratio was applied when the refrigerant containing ammonia was tested.

As clearly seen from Table 6, the refrigerant composition (i.e. refrigerant A) of ammonia and propane leads to the inflammation, but the explosion risk is less than that of propane.

Further, even when the refrigerant A leaks out in a little amount from an apparatus, such leak can be detected by a man even with a trace amount of ammonia because of the ammonia odor contained therein, so that a heavy teak can be prevented beforehand.

In addition, ammonia has a GWP (global warming potential) of one, which is the same as that of carbon dioxide so that the refrigerant composition according to the present invention can have a smaller GWP than that of propane (of which GWP is three). Therefore, there is an advantage that effect on the global warming is made smaller even when the refrigerant composition leaks out into the atmosphere by any possibility. Further, a corrosive property of ammonia as to a copper conduit which is preferably used can be reduced by the mixture refrigerant.

### Example 14

Using a refrigerant composition according to the present invention which contained 20 % by weight of ammonia and 80 % by weight of iso-butane and which was azeotropic (indicated as "refrigerant B" in Table 7 below), a refrigerating machine was operated as a standard refrigerating mode (evaporation temperature: about -30 °C) using a compressor of which rotation number was variable. Refrigerating cycle characteristics of such operation are shown in Table 7 together with basic characteristics (100) of a flon alternative refrigerant referred to as R134a. It is noted that the rotation number of the compressor was adjusted so as to provide the same capacity as to each refrigerant.

**Table 7**

| | R134a | iso-butane | refrigerant B |
|---|---|---|---|
| COP upon refrigerating | 100 | 101 | 103 |
| rotation number of compressor | 100 | 170 | 109 |

As clearly seen from Table 7, the cycle characteristics of the refrigerant B which is a mixture of 20 % by weight of ammonia and 80 % by weight of iso-butane exceed the flon alternative refrigerant referred to as R134a and iso-butane alone as to COPs of the refrigerating operation.

The rotation number of the compressor to obtain the same capacity when iso-butane alone is used is required to be about 170 % of that of R134a while such rotation number when the refrigerant B of which ammonia has a large latent heat is used is about 110 %, which leads to an advantage that a compressor for the flon alternative refrigerant referred to as R134a may be used so that a large modification of an existing apparatus for R134a is not required.

As to explosion risk of the refrigerant B which is a mixture of 20 % by weight of ammonia and 80 % by weight of iso-butane, the following may be supposed: Ammonia is less inflammable and its inflammable range in air is so relatively high as between about 16 vol% and 25 vol%. Mixing iso-butane with ammonia shifts an inflammable range toward a higher concentration side, so that upon leak of the refrigerant composition even in a larger amount, the explosion risk can be suppressed.

Results of explosion comparison tests as to iso-butane alone and the refrigerant B are shown in Table 8 below:

**Table 8**

| | example: refrigerant B / air | prior art: iso-butane / air |
|---|---|---|
| run 1 | inflammation on every time of current passage | explosion on 3rd time of current passage |
| run 2 | inflammation on every time of current passage | explosion on 1st time of current passage |
| run 3 | inflammation on every time of current passage | explosion on 2nd time of current passage |
| run 4 | inflammation on every time of current passage | explosion on 3rd time of current passage |

Test conditions were the same as those of the explosion tests as to propane alone with reference to Table 6 as described above. A mixing ratio of air and iso-butane was 94:6 near a stoichiometric ratio at which an explosion pressure is the largest. The same mixing ratio was applied when the refrigerant containing ammonia was tested.

As clearly seen from Table 8, the refrigerant composition (i.e. refrigerant B) of ammonia and iso-butane leads to the inflammation, but the explosion risk is less than that of iso-butane.

Further, even when the refrigerant B leaks out in a little amount from an apparatus, such leak can be detected by a man even with a trace amount of ammonia because of the ammonia odor contained therein, so that a heavy leak can be prevented beforehand. Further, a corrosive property of ammonia as to the copper conduits can be reduced by the mixture refrigerant.

### Example 15

Using a refrigerant composition according to the present invention which contained 30 % by weight of ammonia and 70 % by weight of propane and which was azeotropic (indicated as "refrigerant C" in Table 9 below), an air conditioner was operated as a standard cooling mode using a compressor of which rotation number was variable. Refrigerating cycle characteristics of such operation are shown in Table 9 together with basic characteristics (100) of the flon refrigerant referred to as R22. It is noted that the rotation number of the compressor was adjusted so as to provide the same capacity as to each refrigerant.

**Table 9**

| | R22 | iso-butane | refrigerant C |
|---|---|---|---|
| COP upon cooling | 100 | 100 | 110 |
| rotation number of compressor | 100 | 115 | 80 |

Although ammonia has small solubilities with a mineral oil, an alkylbenzene oil and an olefin oil, the mineral oil was used in this example as the refrigerating machine oil which had a large solubility with propane. When a viscosity of the refrigerating machine oil is too small, an ester oil and an glycol oil may be used alone or in combination if necessary.

As clearly seen from Table 9, the cycle characteristics of the refrigerant C which is a mixture of 30 % by weight of ammonia and 70 % by weight of propane exceed the flon refrigerant referred to as R22 and propane alone as to COPs of the refrigerating operation.

Particularly, the refrigerant composition has an azeotropic mixing ratio, so that it does not cause a temperature glide (or a temperature gradient) in a heat exchanger due to being non-azeotropic and also no degradation of heat transfer occurs. Thus, even the practical refrigerating machine achieves the improvement in COP almost similar to that shown in Table 9.

The rotation number of the compressor to obtain the same capacity can be less than that in case of using the flon refrigerant referred to as R22, so that a cylinder volume of the compressor may be reduced, which results in an advantage that a cost for the compressor is reduced.

As to explosion risk of the refrigerant C which is a mixture of 30 % by weight of ammonia and 70 % by weight of propane, the following may be supposed: Ammonia is less inflammable and its inflammable range in air is so relatively high as between about 16 vol% and 25 vol%. Mixing ammonia with propane shifts an inflammable range toward a higher concentration side, so that upon leak of the refrigerant composition even in a larger amount, the explosion risk can be suppressed.

Results of explosion comparison tests as to propane alone and the refrigerant C are shown in Table 10 below:

**Table 10**

| | example: refrigerant C / air | prior art: propane / air |
|---|---|---|
| run 1 | inflammation on every time of current passage | explosion on 2nd time of current passage |
| run 2 | inflammation on every time of current passage | explosion on 1st time of current passage |
| run 3 | inflammation on every time of current passage | explosion on 1st time of current passage |
| run 4 | inflammation on every time of current passage | explosion on 2nd time of current passage |

Test conditions were the same as those of the explosion tests as to propane alone with reference to Table 6 as described above. A mixing ratio of air and propane was 92:8 near a stoichiometric ratio at which an explosion pressure is the largest. The same mixing ratio was applied when the refrigerant containing ammonia was tested.

As clearly seen from Table 10, it has been found that the azeotropic refrigerant composition (i.e. refrigerant C) of ammonia and propane leads to the inflammation, but the explosion risk is less than that of propane.

Further, even when the refrigerant C leaks out in a little amount from an apparatus, such leak can be detected by a man even with a trace amount of ammonia because of the ammonia odor contained therein, so that a heavy leak can be prevented beforehand.

### Example 16

Using a refrigerant composition according to the present invention which contained 50 % by weight of ammonia and 50 % by weight of iso-butane and which is azeotropic (indicated as "refrigerant D" in Table 11 below), an air conditioner was operated as a standard cooling mode using a compressor of which rotation number was variable. Refrigerating cycle characteristics of such operation are shown in Table 11 together with basic characteristics (100) of a flon refrigerant referred to as R22. It is noted that the rotation number of the compressor was adjusted so as to provide the same capacity in each refrigerant.

**Table 11**

| | R22 | iso-butane | refrigerant D |
|---|---|---|---|
| COP upon cooling | 100 | 110 | 120 |
| rotation number of compressor | 100 | 280 | 80 |

As clearly seen from Table 11, the refrigerating cycle characteristics of the refrigerant D which is a mixture of 50 % by weight of ammonia and 50 % by weight of iso-butane exceed the flon refrigerant referred to as R22 and iso-butane alone as to COPs of the cooling operation.

Particularly, the refrigerant composition has an azeotropic mixing ratio, so that it does not cause a temperature glide in a heat exchanger due to being non-azeotropic and also no degradation of heat transfer occurs. Thus, even the practical refrigerating machine achieves the improvement in COP almost similar to that shown in Table 11.

The rotation number of the compressor to obtain the same capacity when iso-butane alone is used is required to be about 280 % of that of R22 while such rotation number when the refrigerant D containing ammonia of which latent heat is large is used is about 80 %, which leads to an advantage that a compressor which is smaller than that for the flon refrigerant referred to R22 may be used, which results in a lower cost.

As to explosion risk of the refrigerant D which is a mixture of 50 % by weight of ammonia and 50 % by weight of iso-butane, the following may be supposed: Ammonia is less inflammable and its inflammable range in air is so relatively high as between about 16 vol% and 25 vol%. Mixing ammonia with iso-butane shifts an inflammable range toward a higher concentration side, so that upon leak of the refrigerant composition even in a larger amount, the explosion risk can be suppressed.

Results of explosion comparison tests as to iso-butane alone and the refrigerant D are shown in Table 12 below:

**Table 12**

| | example: refrigerant D / air | prior art: iso-butane / air |
|---|---|---|
| run 1 | inflammation on every time of current passage | explosion on 3rd time of current passage |
| run 2 | inflammation on every time of current passage | explosion on 1st time of current passage |
| run 3 | inflammation on every time of current passage | explosion on 2nd time of current passage |
| run 4 | inflammation on every time of current passage | explosion on 3rd time of current passage |

Test conditions were the same as those of the explosion tests as to propane alone with reference to Table 6 as described above. A mixing ratio of air and iso-butane was 94:6 near a stoichiometric ratio at which an explosion pressure is the largest. The same mixing ratio was applied when the refrigerant containing ammonia was used.

As clearly seen from Table 12, the azeotropic refrigerant composition (i.e. refrigerant D) of ammonia and iso-butane leads to the inflammation, but the explosion risk is less than that of iso-butane.

Further, even when the refrigerant leaks out in a little amount from an apparatus, such leak can be detected by a man even with a trace amount of ammonia because of the ammonia odor contained therein, so that a heavy leak can be prevented beforehand. Further, a corrosive property of ammonia as to copper conduits can be reduced by the azeotropic mixture refrigerant.

### Example 17

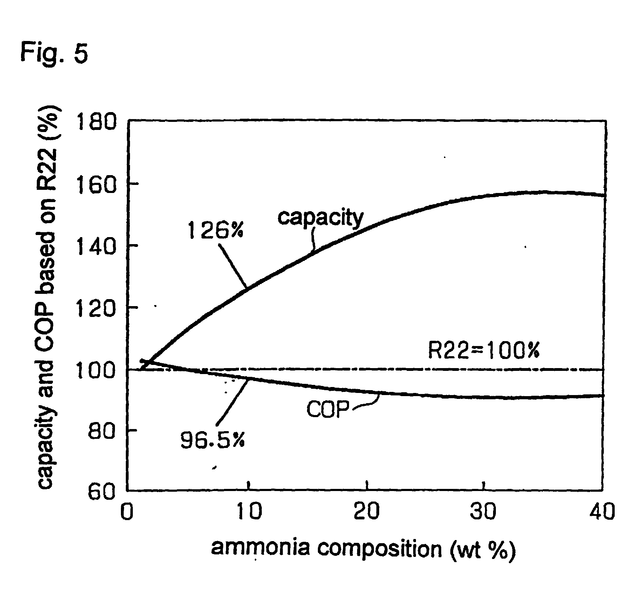

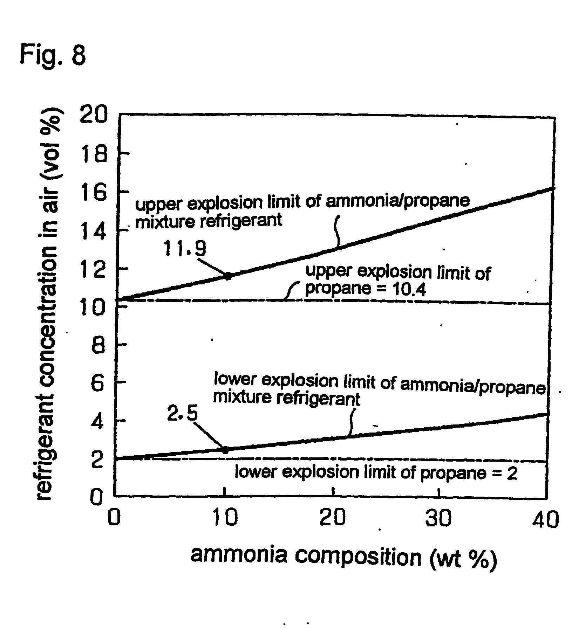

Theoretical performances and physical properties of refrigerant compositions are shown in Figs. 5, 6 and 7 when ammonia and propane are mixed in a ratio of about 1 to 40 % by weight to 99 to 60 % by weight. Further, explosion limits (or explosion region) of the refrigerant compositions are shown in Fig. 8 when the refrigerant compositions diffuse into air.

Figs. 5, 6 and 7 show theoretical calculation results as to an air conditioner when operated under standard cycle conditions of a condensation temperature of 50 °C, an evaporation temperature of 5 °C, a supercooling extent at an outlet of the evaporator of 5 °K and a superheating extent at a compressor suction port of 5°K.

Fig. 5 shows a capacity and a COP of the air conditioner when an ammonia composition (i.e. weight percent) of the refrigerant composition as a mixture of ammonia and propane is changed based on that a capacity and a COP of a flon refrigerant referred to as R22 are 100 % respectively.

It is seen from Fig. 5 that when the ammonia composition is not larger than 10 % by weight, almost the same COP (not smaller than 96.5 %) as that of the flon refrigerant referred to as R22 can be ensured and that the capacity exceeds that of the flon referred to as R22.

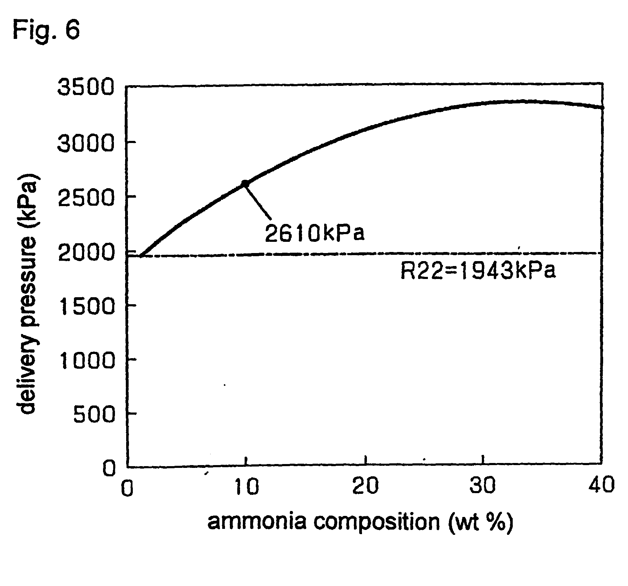

Fig. 6 shows a delivery pressure of the compressor when an ammonia composition (i.e. weight percent) of the mixture refrigerant of ammonia and propane is changed. It is seen from Fig. 6 that when the ammonia composition is larger, the delivery pressure is larger, and that when the ammonia composition is reduced to not larger than 10 % by weight, the delivery pressure can be suppressed to not larger than 2610 kPa.

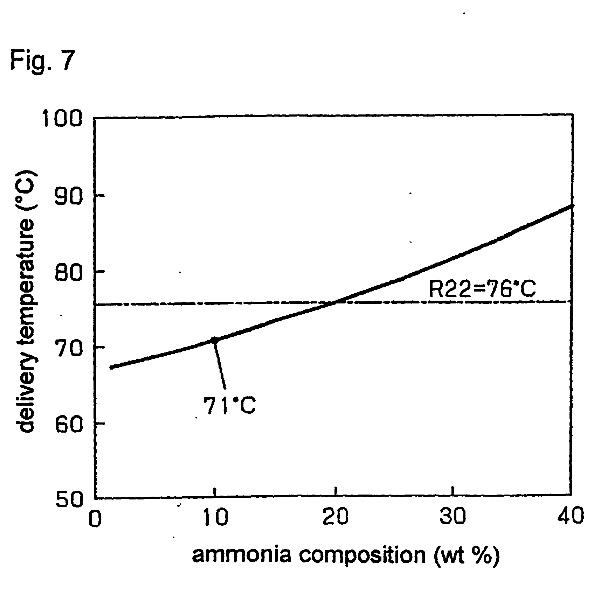

Fig. 7 shows a delivery temperature of the compressor when an ammonia composition (i.e. weight percent) of the mixture refrigerant of ammonia and propane is changed. It is seen from Fig. 7 that when the composition of ammonia is larger, the delivery temperature is larger, and that when the ammonia composition is reduced to not larger than 10 % by weight, the delivery temperature can be suppressed to not higher than 71 °C, which is lower than that of the flon refrigerant referred to as R22 of 76 °C.

Fig. 8 shows explosion test results of the refrigerant composition of ammonia and propane when it leaks out and diffuses into air, and indicates explosion lower and upper limits when an ammonia weight ratio of the mixture refrigerant is changed. In addition, results of propane explosion tests simultaneously carried out are shown. The explosion tests were carried out as follows:

As an explosion vessel, a cylindrical pressure resistant vessel (having an inner diameter of 100 mm and a height of 200 mm) made of a stainless steel having an observation window was used. The vessel had electrodes for ignition equipped in its center. The ignition source was an arc discharge by means of neon transformer having a secondary output of 20 mA and 15 kV. It was confirmed that the ignition source corresponded to an spark having a discharge energy of about 10 J.

After vacuating the inside of the explosion vessel, a gas was supplied up to a predetermined partial pressure and then air was supplied up to the atmospheric pressure while using a digital manometer, whereby a mixture gas was prepared. The composition of the gas was determined by a ratio of the partial pressure to the total pressure. Stirring of gases was carried out by spontaneous mixing upon rapid supply of air. Occurrence of explosion was determined by both of an output change of a thermocouple equipped in the upper portion of the vessel and visual observation of a flame occurring state through the window of the vessel.

It is seen from Fig. 8 that when the weight percent of ammonia is larger, the explosion lower limit is higher, and that when the ammonia percent is 10 % by weight, the explosion lower limit is 2.5 vol%, which is larger than that of propane alone (2 vol%). That is, the refrigerant composition according to the present invention is included in a combustible (or inflammable) gas defined by High Pressure Gas Security Regulation (Kouatsu-Gas-Hoan-Kisoku), but it is less likely to explode than propane alone when it leaks out from the apparatus by any possibility.

### Example 18

Refrigeration characteristics of a refrigerant composition of 1 % by weight of ammonia and 99 % by weight of propane (indicated as refrigerant E in Table 13 below) are shown in Table 13 below wherein a flon refrigerant referred to as R22 is based (namely 100). It is noted that the results are from theoretical calculation of an air conditioner operated under standard conditions of a condensation temperature of 50 °C, an evaporation temperature of 5 °C, a supercooling extent at an outlet of the evaporator of 5 °K and a superheating extent at a compressor suction port of 5°K.

**Table 13**

| | R22 | propane | refrigerant E |
|---|---|---|---|
| theoretical capacity | 100 | 84 | 100 |
| theoretical COP | 100 | 98 | 103 |
| delivery pressure | 1943 kPa | 1710 kPa | 1948 kPa |

It can be said from Table 13 that as to the refrigeration characteristics of the refrigerant E of the mixture of 1 % by weight of ammonia and 99 % by weight of propane, the theoretical capacity is similar to that of the flon refrigerant referred to as R22, and the theoretical COP exceeds that of the flon refrigerant referred to as R22 a little, and thus the refrigerant E is suitable to an air conditioner of a direct system. Further, since its delivery pressure is similar to that of R22, no design modification is required as to pressure resistance.

Results of explosion tests are shown in Table 14 below which were carried out as to propane alone, ammonia alone and the refrigerant E. The tests were carried out in the same way as described above.

**Table 14**

| | propane | ammonia | refrigerant E |
|---|---|---|---|
| explosion lower limit | 2.0 vol % | 13.7 vol % | 2.15 vol % |
| explosion upper limit | 10.4 vol % | 29.8 vol % | 10.5 vol % |

It is seen from Table 14 that the explosion lower limit of the refrigerant E (2.15 vol%) is larger a little than that of propane alone due to an effect of ammonia, which means that the refrigerant E is less likely to explode.

Considering the above, the refrigerant E can provide the theoretical performance similar to that of the flon refrigerant referred to as R22. In addition, no design change is necessary as to the pressure resistance and an existing system for R22 can be used, so that design development becomes easy.

Further, even when the refrigerant E leaks out in a little amount from an apparatus, such leak can be detected by a man even with a trace amount of ammonia because of the ammonia odor contained therein, so that a heavy leak can be prevented beforehand.

In addition, the explosion lower limit of the refrigerant E is larger a little than that of propane alone, and thus the explosion risk may be reduced a little. Also, since the ammonia composition is so little as 1 % by weight, corrosion resistant property against ammonia as to copper conduits and materials of the refrigerating apparatus (such as motor materials) can be improved.

### Example 19

Refrigeration characteristics of a refrigerant composition 5 % by weight of ammonia and 95 % by weight of propane (indicated as refrigerant F in Table 15 below) are shown in Table 15 wherein a flon refrigerant referred to as R22 is based (namely 100). It is noted that the results are from theoretical calculation of an air conditioner operated under standard conditions of a condensation temperature of 50 °C, an evaporation temperature of 5 °C, a supercooling extent at an outlet of the evaporator of 5 °K and a superheating extent at a compressor suction port of 5°K.

**Table 15**

| | R22 | propane | refrigerant F |
|---|---|---|---|
| theoretical capacity | 100 | 84 | 115 |
| theoretical COP | 100 | 98 | 100 |
| delivery pressure | 1943 kPa | 1710 kPa | 2270 kPa |

It can be said from Table 15 that as to the refrigeration characteristics of the refrigerant F of the mixture of 5 % by weight of ammonia and 95 % by weight of propane, the theoretical COP is similar to that of the flon refrigerant referred to as R22, and the theoretical capacity exceeds that of the flon refrigerant referred to as R22 by 15 %, and thus the refrigerant F is suitable to an air conditioner of an indirect system such a chiller which has a large heat transfer loss.

In addition, it is seen that the delivery pressure is higher than that of the flon refrigerant referred to as R22 by about 300 kPa, but no design change is required as to the pressure resistance.

Results of explosion tests are shown in Table 16 below which were carried out as to propane alone, ammonia alone and the refrigerant F. The tests were carried out in the same way as described above.

**Table 16**

| | propane | ammonia | refrigerant F |
|---|---|---|---|
| explosion lower limit | 2.0 vol % | 13.7 vol % | 2.25 vol % |
| explosion upper limit | 10.4 vol % | 29.8 vol % | 11.0 vol % |

It can be said from Table 16 that the explosion lower limit of the refrigerant F (2.25 vol%) is larger than that of propane alone due to an effect of ammonia, which means that the refrigerant F is less likely to explode.

Considering the above, the refrigerant F can provide the theoretical performance which is greatly larger than that of the flon refrigerant referred to as R22. In addition, no design change is necessary as to the pressure resistance, so that design development becomes easy.

Further, even when the refrigerant F leaks out even in a little amount from an apparatus, such leak can be detected by a man even with a trace amount of ammonia because of the ammonia odor contained therein, so that a heavy leak can be prevented beforehand.

In addition, the explosion lower limit of the refrigerant F is higher than that of propane alone, and thus the explosion risk may be reduced. Also, since the ammonia composition is small, corrosion resistant property against ammonia as to copper conduits, motor materials and so on can be improved.

### INDUSTRIAL APPLICABILITY

As described above, the refrigerant composition according to the present invention provides the theoretical performances which are similar or superior to those of the flon refrigerant referred to as R22. Further, although the delivery pressure of the refrigerant composition according to the present invention is higher than that of the flon refrigerant referred to as R22, the theoretical performance and the delivery temperature are not so different from those of the flon refrigerant referred to as R22, so that the existing system can be used without no big design change thereof. Particularly, the refrigerant composition according to the present invention can be preferably used in the refrigerating apparatus which includes the hermetic motor compressor.

Further, even when the refrigerant composition according to the present invention leaks out from an apparatus, such leak can be detected by a man even with a trace amount of ammonia because of the ammonia odor contained therein, so that a heavy leak can be prevented beforehand. In addition, the explosion lower limit of the refrigerant composition according to the present invention is larger than that of propane alone, and thus the explosion risk can be reduced. Also, since the corrosive activity of ammonia as to the copper conduits and the materials of the apparatus (such as the motor materials) is greatly suppressed by the inclusion of the hydrocarbon (for example, propane and iso-butane).

## Claims

1. A refrigerant composition consisting substantially of at least one hydrocarbon and ammonia characterized in that it contains ammonia in a concentration in the range between 1 % and 60 % by weight.

2. The refrigerant composition according to claim 1 wherein it contains ammonia in a concentration in the range between 1 % and 20 % by weight.

3. The refrigerant composition according to claim 1 wherein it contains ammonia in a concentration in the range between 1 % and 5 % by weight.

4. The refrigerant composition according to claim 1 wherein it contains ammonia in a concentration in the range between 1 % and 4 % by weight.

5. The refrigerant composition according to claim 1 wherein it contains ammonia in a concentration in the range between 1 % and 3 % by weight.

6. The refrigerant composition according to claim 1 wherein it contains ammonia in a concentration in the range between 30 % and 50 % by weight.

7. The refrigerant composition according to claim 1 wherein it contains ammonia in a concentration in the range between 35 % and 50 % by weight.

8. The refrigerant composition according to any one of claims 1 to 7 wherein the hydrocarbon is at least one selected from ethane, propane, cyclopropane, propylene and iso-butane.

9. The refrigerant composition according to claim 1 wherein the hydrocarbon is propane and the concentration of ammonia is in the range between 1 % and 5 % by weight or between 10 % and 60 % by weight.

10. The refrigerant composition according to claim 9 wherein the concentration of ammonia is in the range between 1 % and 4 % by weight or between 13 % and 60 % by weight.

11. The refrigerant composition according to claim 1 wherein the hydrocarbon is propane and the concentration of ammonia is in the range between 1 % and 40.

12. The refrigerant composition according to claim 11 wherein it contains 30 % by weight of ammonia and 70 % by weight of propane.

13. The refrigerant composition according to claim 11 wherein it contains 1 % by weight of ammonia and 99 % by weight of propane.

14. The refrigerant composition according to claim 11 wherein it contains 5 % by weight of ammonia and 95 % by weight of propane.

15. The refrigerant composition according to claim 11 wherein it contains 10 % by weight of ammonia and 90 % by weight of propane.

16. The refrigerant composition according to claim 1 wherein the hydrocarbon is iso-butane and the concentration of ammonia is in the range between 1 % and 15 % by weight or between 25 % and 60 % by weight.

17. The refrigerant composition according to claim 16 wherein the concentration of ammonia is in the range between 1 % and 10 % by weight or between 30 % and 60 % by weight.

18. The refrigerant composition according to claim 1 wherein the hydrocarbon is iso-butane and it contains ammonia in the range between 15 % and 60 % by weight and iso-butane in the range between 85 % and 40 % by weight.

19. The refrigerant composition according to claim 18 wherein it contains 50 % by weight of ammonia and 50 % by weight of iso-butane.

20. The refrigerant composition according to any one of claims 1 to 19 wherein it is used for a hermetic motor compressor.

21. A refrigerating apparatus forming a refrigerating cycle in which a refrigerant composition is compressed, condensed, expanded and evaporated characterized in that the refrigerant composition according to any one of claims 1 to 20 is used.

22. The refrigerating apparatus according to claim 21 wherein a hydrocarbon-based refrigerating machine oil of which sulfur content is not larger than 0.01 % by weight is used.

23. The refrigerating apparatus according to claim 22 wherein the refrigerating machine oil is an alkylbenzene oil or a polyolefin oil.

24. The refrigerating apparatus according to claim 22 or 23 wherein the refrigerating machine oil contains at least one selected from an α-olefin, a higher aliphatic alcohol and a fluorinated higher aliphatic alcohol as well as a phenol-based antioxidant.

25. The refrigerating apparatus according to any one of claims 21 to 24 wherein a hermetic motor compressor is used.

26. The refrigerating apparatus according to any one of claims 21 to 25 wherein a desiccant made of A-type synthetic zeolite of sodium/potassium type aluminosilicate is placed in the refrigerating cycle.

27. The refrigerating apparatus according to claim 26 wherein the refrigerant composition in a liquid condition contacts with the desiccant at a temperature not lower than a dissolution critical temperature between the hydrocarbon and ammonia.

28. A compressor which compresses the refrigerant composition according to any one of claims 1 to 20 wherein at least one selected from a poly(phenylene sulfide), a polysulfone, a poly(ether sulfone), a polyetheretherketone, a polyetherimide, a polyamideimide and a polyesterimide is used as an insulation material of a motor.

29. The compressor according to claim 28 wherein a cluster or a muffler is made of at least one material selected from a poly(phenylene sulfide), a polysulfone, a poly(ether sulfone), a polyetheretherketone and a polyetherimide.

30. The compressor according to claim 28 or 29 wherein a magnet wire of the motor is selected from a copper wire, a nickel plated copper wire, an aluminum wire and an aluminum coated copper wire.

31. The compressor according to any one of claims 28 to 30 wherein at least one selected from an acrylonitrile-butadiene rubber, a hydrogenated acrylonitrile-butadiene rubber, a fluorine-containing rubber and an amide-based thermoplastic elastomer is used for sealing or vibration-proof of the compressor.
